# EUROPEAN PATENT APPLICATION

(11) **EP 4 811 557 A1**
(43) Date of publication of application: **23.09.2026**
(21) Application number: 24889886.8
(22) Date of filing: 04.01.2024
(51) Int. Cl.: H01R 13/40, G02B 6/38

(54) **SHOCK-RESISTANT OPTICAL AND ELECTRICAL HYBRID CONNECTOR**

(30) Priority: 14.11.2023 CN 202311525660; 14.11.2023 CN 202311530636
(71) Applicant: Accelink Technologies Co., Ltd., Wuhan, Hubei 430000 (CN)
(72) Inventor: TONG, Chao, Wuhan, Hubei 430000 (CN); ZHAO, Xiaobo, Wuhan, Hubei 430000 (CN); WEN, Jiazhao, Wuhan, Hubei 430000 (CN); CHENG, Gangxi, Wuhan, Hubei 430000 (CN); XIONG, Tao, Wuhan, Hubei 430000 (CN); ZHU, Xinhai, Wuhan, Hubei 430000 (CN); ZHU, Hu, Wuhan, Hubei 430000 (CN); SONG, Beili, Wuhan, Hubei 430000 (CN); QUAN, Benqing, Wuhan, Hubei 430000 (CN); LUO, Yong, Wuhan, Hubei 430000 (CN)
(74) Representative: Frenkel, Matthias Alexander
(86) International application number: PCT/CN2024/070666
(87) International publication number: WO 2025/102511

(57) **Abstract**

The present application relates to the technical field of optical communications. Provided is a shock-resistant optical and electrical hybrid connector, comprising a male and female connectors, wherein the interiors of the male and female connectors are respectively provided with a first and second ceramic abutting heads which contain optical fibers, and a first metal contact head arranged on at least one side of the first ceramic abutting head, and a second metal contact head arranged on at least one side of the second ceramic abutting head. Further provided is an optical and electrical hybrid connector, comprising a male and female connectors, wherein the male connector is formed by a first housing sleeve, a first ferrule assembly, a central shaft assembly and a first boot that are sleeved on each other; and the female connector is formed by a second housing sleeve, a second ferrule assembly, a power transmission assembly and a second boot that are sleeved on each other.

## Description

### Cross Reference to Related Applications

This disclosure claims priority to the following patent applications:
(1) application submitted to the Chinese Patent Office on November 14, 2023, with application number 202311530636.2, titled "SHOCK-RESISTANT OPTICAL AND ELECTRICAL HYBRID CONNECTOR ", and
(2) application Submitted to the Chinese Patent Office on November 14, 2023, with application number 202311525660.7, titled "OPTICAL AND ELECTRICAL HYBRID CONNECTOR."

### TECHNICAL FIELD

The present disclosure relates to the field of optical communication technology, particularly to an optical and electrical connector.

### BACKGROUND

Optical fiber communication is a communication method that uses light waves as information carriers and optical fibers as transmission media. In the field of optical communication technology, connectors, optical modules, adapters, and other devices are usually involved.

The connector is an optical passive device that realizes the connection between optical fibers, and it has the functions of connecting optical fibers to optical fibers, optical fibers to active devices, optical fibers to equipment, optical fibers to other passive devices, and optical fibers to instruments. As a very important optical signal interface device in optical fiber communication, the optical module has optical and electrical interfaces, wherein the optical interface is connected to the optical fiber to transmit optical signals, and the electrical interface is connected to external communication terminal equipment; the adapter is used to connect two connectors. Especially in optical fiber equipment represented by 5G base stations and FTTR devices, where remote power supply is required for wide width communication, there are a large number of plug-in optical and electrical lines. Due to the separation of optical instruments and electrical instruments, there are a large number of connectors divided into two categories, i.e. optical connectors and electrical connectors, which need to be paired correctly one by one. This leads to cumbersome operation during installation and maintenance, and is prone to plug-in errors.

On the other hand, in the FTTH network, where traditional copper wires are used to transmit network signals and provide power to the terminal end s at the end of the network, with the development of FTTH optical networks towards FTTR optical networks, for example, vehicle terminals need to meet the requirements of autonomous driving and artificial intelligence interaction, and the terminal ends have increasingly high bandwidth requirements. The transmission capacity for signal of traditional copper wire can no longer meet the bandwidth requirements of the terminal ends, then it is a trend that FTTR uses less and less copper but more and more optical fiber as the transmission medium for signal transmission at the terminal end of the network, and the power supply at the terminal end is provided by cables. In order to connect these composite cables, one existing solution of the prior art is to independently design the optical connector and the electrical connector, wherein the optical connector and the optical adapter are coupled and connected to achieve optical signal docking, and the electrical connector and electrical adapter are plugged and coupled to achieve electrical signal coupling and docking. However, separate optical and electrical connectors requires plugging and unplugging twice to complete the connection with the adapter. The solution is to use optical and electrical hybrid connectors and optical and electrical hybrid adapters, but in some existing solutions, the electrical terminals of the connectors are exposed externally, which poses a certain risk of electric shock and human safety issues during actual use.

In another aspect, the precision of fiber of the optical fiber connectors during the docking process is very high, requiring micron level coupling. Any force from non optical axis during the coupling docking process will affect the efficiency and accuracy of optical fiber coupling. At present, the electrical terminals of optical and electrical hybrid connectors and optical and electrical hybrid adapters are asymmetrically distributed in the optical fiber coupling structure, resulting in the insertion and extraction stress during the insertion and extraction process of the electrical terminals, which affects the coupling accuracy of the optical channel of the optical fiber connector.

Yet another aspect is that in the process of technological transition, technological achievements often could not be widely used immediately, and old technologies will coexist with new technologies for a long time before being completely replaced by new technologies. Therefore, how to achieve compatibility and matching between pure optical docking connectors, pure electrical docking connectors, and optical and electrical hybrid connectors is also a major technical problem that the industry needs to solve at present.

The above issues are particularly prominent in terminal scenarios with remote power supply and 5G signal coverage, as well as in vehicle applications with strict requirements for waterproofing, dustproof, and shock resistance. Given this, overcoming the shortcomings of the existing technology is an urgent problem that needs to be solved in this technical field.

### SUMMARY

The technical problem to be solved by the present disclosure is to find a compatible optical and electrical hybrid connector that is suitable for a vehicle-mounted environment, can achieve good shock resistance, and avoid stability problems related to connection of connectors caused by vibration objects in the environment.

The further technical problem solved by the present disclosure is to provide an optical and electrical hybrid connector based on the shock-resistant optical and electrical hybrid connector, which can effectively be adapted to the application requirements of integrated and miniaturized hybrid connectors.

The present disclosure adopts the following technical solutions.

In the first aspect, the present disclosure provides a shock-resistant optical and electrical hybrid connector based on an environment with vibrations.

A shock-resistant optical and electrical hybrid connector comprises a male connector 1 and a female connector 2, wherein the male connector 1 and the female connector 2 inside are respectively provided with a first ceramic abutting head 11 and a second ceramic abutting head 21, both of which contain optical fibers, as well as a first metal contact head 12 arranged on at least one side of the first ceramic abutting head 11 and a second metal contact head 22 arranged on at least one side of the second ceramic abutting head 21, wherein an interlocking structure between the male connector 1 and the female connector 2 comprises:
a first slot 23, which has a first predetermined length along an axial direction and is located on an upper surface of a housing of the female connector 2 near a connecting end between the female connector 2 and the male connector 1, wherein a first locking head 24 is provided on the first slot 23, and a crossbar with a first socket 14 and a pressure part 15 is connected to an outer upper surface of a housing of the male connector 1 via a support rod 13, wherein the first socket 14 and the pressure part 15 are located on opposite sides of the support rod 13;
after the female connector 2 is connected to the male connector 1, the first locking head 24 and the first socket 14 are locked, and the first slot 23 accommodates a part of the crossbar located above the male connector 1, wherein an anti-touch guardrail structure 16 with a height greater than or equal to a height of the pressure part in a locked state is provided in an area where the male connector 1 accommodates the crossbar.

In the second aspect, the present disclosure provides an optical and electrical hybrid connector based on an application requirement for integrated and miniaturized hybrid connectors.

An optical and electrical hybrid connector comprises a male connector 4 and a female connector 5,
wherein the male connector 4 is composed of a first housing sleeve 41, a first ferrule assembly 42, a central shaft assembly 43, and a first boot 44 that are mutually sleeved, wherein at least one horizontal plane of the central shaft assembly 43 is provided with a rectangular protrusion 431 which is configured to limit a slot 451 of a gate-type electrical terminal 45 and support gateposts 452 on both sides of the gate-type electrical terminal 45, and a part of the gatepost 452 of the gate-type electrical terminal 45 extending beyond an end face of the central shaft assembly 43 is embedded in an accommodating chamber 412 of the first housing sleeve 41 after assembling the first housing sleeve 41 and the central shaft assembly 43, wherein the accommodating chamber 412 is in a shape of strip and is made on an inner wall of a long side, parallel to an axial direction, near the first housing 41;
the female connector 5 is composed of a second housing sleeve 51, a second ferrule assembly 52, a power transmission assembly 53 and a second boot 54 that are mutually sleeved, wherein the power transmission assembly 53 includes a columnar body 531 that is docked with the second ferrule assembly 52, and a positioning member 532 fixed on the columnar body 531 and configured to embed a fork-shaped electrical terminal 533, and a fork head of the fork-shaped electrical terminal 533 is fixed after passing through a guide through-hole 511 on an inner wall of the second housing sleeve 51;
wherein when the male connector 4 and the female connector 5 are connected, the first ferrule assembly 42 is docked with the second ferrule assembly 52, and contacts on both sides of the fork head of the fork-shaped electrical terminal 533 abuts against the gateposts 452 on both sides of the gate-type electrical terminal 45 on both sides of the fork head.

Compared with the prior art, the beneficial effects of the present disclosure are that the present disclosure provides a set of the first locking head and first socket suitable for the locking and unlocking between the male and female connectors, as well as their associated matching structures, to achieve an optical and electrical hybrid connector suitable for vibration environments in similar vehicle-mounting scenarios.

In a preferred embodiment of the present disclosure, a set of effective waterproof structure is also provided in terms of waterproof and dustproof, which can structurally interact with the locking structure mentioned above, greatly improving its installation and waterproof effect.

On the other hand, the present disclosure proposes a set of optical and electrical hybrid connector that ingeniously integrates traditional pure photoelectric decoders into the electrical connection structure, and does not require an additional increase in an optical interface volume during implementation, fully reusing the inherent characteristics of the original structure and extracting positions that can be used to layout the electrical connection structure; not only can it ensure that there will be no electricity leakage or other issues, but it can also ensure that the strength of the integrated optical and electrical connector will not decrease.

The electrical connection structure designed by the present disclosure also has its own strength, and in the preferred implementation schemes, damping and convenience during the corresponding assembly process are also optimized.

### BRIEF DESCRIPTION OF THE DRAWINGS

In order to provide a clearer explanation of the embodiments of the present disclosure or the technical solutions in the prior art, the following will briefly introduce the accompanying drawings required for the description of the embodiments or the prior art. It is obvious that the accompanying drawings described below are only some embodiments of the present disclosure. For those skilled in the art, other drawings can be obtained based on these drawings without creative labor.
Figure 1 is a sectional view of the overall structure of a shock-resistant optical and electrical hybrid connector provided in Embodiment 1 of the present disclosure;
Figure 2 is a schematic diagram of the overall structure of a shock-resistant optical and electrical hybrid connector provided in Embodiment 1 of the present disclosure;
Figure 3 is a schematic diagram of a protrusion and a limiting portion of a female connector of a shock-resistant optical and electrical hybrid connector provided in Embodiment 1 of the present disclosure;
Figure 4 is a schematic diagram of an elongated concave groove of the male connector of a shock-resistant optical and electrical hybrid connector provided in Embodiment 1 of the present disclosure;
Figure 5 is a schematic diagram of a first notch of a shock-resistant optical and electrical hybrid connector provided in Embodiment 1 of the present disclosure;
Figure 6 is a schematic diagram of a support rod of a shock-resistant optical and electrical hybrid connector provided in Embodiment 1 of the present disclosure;
Figure 7 is a schematic diagram of the mating between a first notch and a support rod of a shock-resistant optical and electrical hybrid connector provided in Embodiment 1 of the present disclosure;
Figure 8 is a schematic diagram of a ring concave groove of a shock-resistant optical and electrical hybrid connector provided in Embodiment 1 of the present disclosure;
Figure 9 is a schematic diagram of a waterproof rubber ring of a shock-resistant optical and electrical hybrid connector provided in Embodiment 1 of the present disclosure;
Figure 10 is a sectional view of a first ceramic abutting head being matched with a female port of a shock-resistant optical and electrical hybrid connector provided in Embodiment 1 of the present disclosure;
Figure 11 is a schematic diagram of a first ceramic abutting head being matched with a female port of a shock-resistant optical and electrical hybrid connector provided in Embodiment 1 of the present disclosure;
Figure 12 is a schematic diagram of a sub-male port of a shock-resistant optical and electrical hybrid connector provided in Embodiment 1 of the present disclosure;
Figure 13 is a schematic diagram of the mating between the sub-male and female ports of a shock-resistant optical and electrical hybrid connector provided in Embodiment 1 of the present disclosure;
Figure 14 is a schematic diagram of the first form of a pressure part of a shock-resistant optical and electrical hybrid connector provided in Embodiment 1 of the present disclosure;
Figure 15 is a schematic diagram of the second form of a pressure part of a shock-resistant optical and electrical hybrid connector provided in Embodiment 1 of the present disclosure;
Figure 16 is a schematic diagram of the overall structure of a shock-resistant optical and electrical hybrid connector provided in Embodiment 2 of the present disclosure;
Figure 17 is a schematic diagram of a central shaft assembly of a shock-resistant optical and electrical hybrid connector provided in Embodiment 2 of the present disclosure;
Figure 18 is a schematic diagram of a gate-type electrical terminal of a shock-resistant optical and electrical hybrid connector provided in Embodiment 2 of the present disclosure;
Figure 19 is a schematic diagram of an accommodating chamber of a shock-resistant optical and electrical hybrid connector provided in Embodiment 2 of the present disclosure;
Figure 19a is a sectional view of the accommodating chamber of a shock-resistant optical and electrical hybrid connector provided in Embodiment 2 of the present disclosure;
Figure 20 is a schematic diagram of a power transmission assembly of a shock-resistant optical and electrical hybrid connector provided in Embodiment 2 of the present disclosure;
Figure 21 is a sectional view of a second housing sleeve of a shock-resistant optical and electrical hybrid connector provided in Embodiment 2 of the present disclosure;
Figure 22 is a schematic diagram of the mating of a fork-shaped electrical terminal and a guide groove of a shock-resistant optical and electrical hybrid connector provided in Embodiment 2 of the present disclosure;
Figure 23 is a schematic diagram of a limiting protrusion and a channel of the central shaft assembly of a shock-resistant optical and electrical hybrid connector provided in Embodiment 2 of the present disclosure;
Figure 23a is a perspective view in the direction of an arrow in Figure 8 of a shock-resistant optical and electrical hybrid connector provided in Embodiment 2 of the present disclosure;
Figure 23b is a top view of Figure 8 of a shock-resistant optical and electrical hybrid connector provided in Embodiment 2 of the present disclosure;
Figure 23c is an exploded view of Figure 8 of a shock-resistant optical and electrical hybrid connector provided in Embodiment 2 of the present disclosure;
Figure 24 is a schematic diagram of the mating of a spring and a limiting block of a shock-resistant optical and electrical hybrid connector provided in Embodiment 2 of the present disclosure;
Figure 25 is a schematic diagram of a first housing sleeve of a shock-resistant optical and electrical hybrid connector provided in Embodiment 2 of the present disclosure;
Figure 26 is a schematic diagram of a fork-shaped electrical terminal of a shock-resistant optical and electrical hybrid connector provided in Embodiment 2 of the present disclosure.

List of the reference numerals for Embodiment 1
1-Male connector, 11- First ceramic abutting head, 12- First metal contact head, 13- Support rod, 14- First socket, 15- Pressure part, 151- Diagonal edge, 152- Horizontal edge, 16-Guardrail structure, 17- elongated concave groove, 18- Ring concave groove, 19- Female port, 2- Female connector, 21- Second ceramic abutting head, 22- Second metal contact head, 23-First slot, 231- First notch, 24-First locking head, 241- Arrow wing, 242- Locking protrusion, 25- Limiting portion, 26- Fence structure, 27- sub-male port, 28- Anti-misoperation protrusion, 29- Anti-misoperation groove, 3- Waterproof rubber ring.

List of the reference numerals for Embodiment 2
4-Male connector, 41- First housing sleeve, 411- Ferrule guide groove, 412- Accommodating chamber, 42-First ferrule assembly, 421-Limiting block, 43-central shaft assembly, 431-rectangular protrusion, 432-limiting protrusion, 433-pulling-resistant protrusion, 434-channel, 44-first boot, 45-gate-type electrical terminal, 451-slot, 452-gatepost, 453-gate beam, 46-spring,
5-female connector, 51-second housing sleeve, 511-guide through-hole, 52-second ferrule assembly, 53-power transmission assembly, 531-columnar body, 532-positioning member, 5321-rectangular groove, 5322-skylight, 533-fork-type electrical terminal, 54-second boot, 6-wire.

### SUMMARY

In order to clarify the purpose, technical solution, and advantages of the present disclosure further, the following will provide further detailed explanations of the present disclosure in conjunction with the accompanying drawings and embodiments. It should be understood that the specific embodiments described herein are only used to explain the present disclosure and are not intended to limit the present disclosure.

In the description of the present disclosure, the terms "inside", "outside", "longitudinal", "lateral", "upper", "lower", "top", "bottom", etc. indicate orientation or positional relationships based on the orientation or positional relationships shown in the accompanying drawings, only for the convenience of describing the present disclosure and not to require the present disclosure to be constructed and operated in a specific orientation, and therefore should not be understood as limiting the present disclosure.

The terms "first", "second", etc. used in the present disclosure are for descriptive purposes only and should not be understood as indicating or implying relative importance or implying the number of technical features indicated. Thus, features described with "first", "second", etc. may explicitly or implicitly include one or more of these features. In the description of this application, unless otherwise specified, the meaning of "multiple" refers to two or more than two.

In this application, unless otherwise specified and limited, the term "connection" should be interpreted broadly. For example, "connection" can be a fixed connection, a detachable connection, or an integrated structure; it can be directly connected or indirectly connected through an intermediate medium. In addition, the term "coupling" can refer to an electrical connection that enables signal transmission.

In addition, the technical features involved in the various embodiments of the present disclosure described below can be combined with each other as long as they do not conflict with each other.

### Embodiment 1

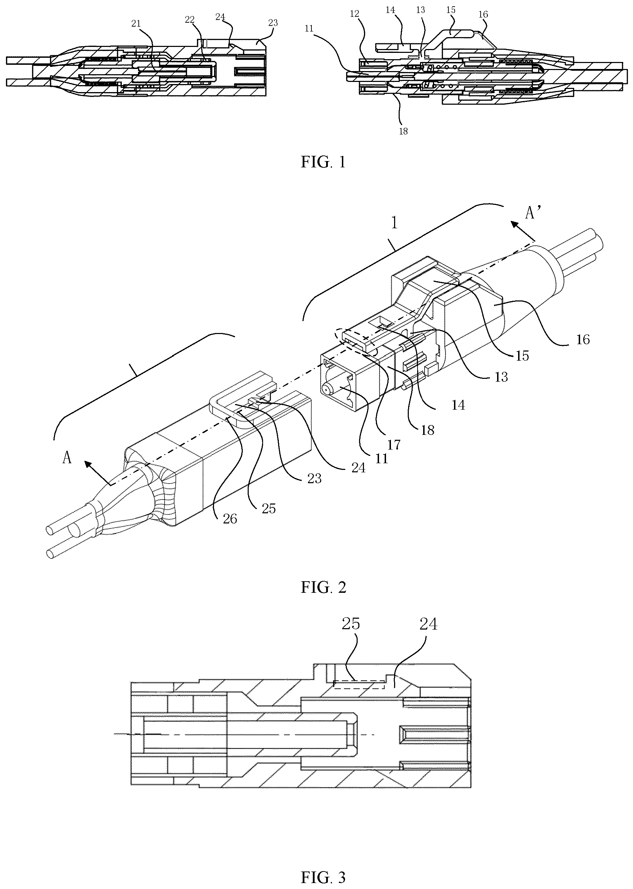

Embodiment 1 of the present disclosure provides a shock-resistant optical and electrical hybrid connector, as shown in Figures 1 and 2, wherein Figure 1 is a cross-sectional view of Figure 2 after aligning the ceramic ferrules contained therein axially, and taking the A-A' cross-sectional line shown in Figure 2 for cutting. Unless otherwise specified, the subsequent sectional views in the embodiment of the present disclosure are obtained by vertically cutting along the central axis where the ceramic ferrule is located. It should be noted that the scope of protection of the embodiments of the present disclosure needs to be based on the textual description in the specification, and the corresponding drawings are example structures presented as relatively complete solutions. Therefore, the effects presented herein are based on the content of the relatively complete textual solution, the content of the drawings in the specification should not be interpreted too much, and the complete structural contents limited to the various combination schemes are composed of possible structures that the textual description of the embodiments of the present disclosure intends to express (for example, the existence of structures in the corresponding drawings is more of a selection combination mode in the embodiments of the present disclosure, while the corresponding selection combination strategy is implemented based on the textual content description). The shock-resistant optical and electrical hybrid connector includes a male connector 1 and a female connector 2, wherein the male connector 1 and the female connector 2 are respectively inside provided with a first ceramic abutting head 11 and a second ceramic abutting head 21, both of which contain optical fibers, as well as a first metal contact head 12 arranged on at least one side of the first ceramic abutting head 11 and a second metal contact head 22 arranged on at least one side of the second ceramic abutting head 21. An interlocking structure between the male connector 1 and the female connector 2 includes:
a first slot 23 which is located on an upper surface of a housing of the female connector 2, near a connecting end between the female connector 2 and the male connector 1, and has a first predetermined length along an axial direction, wherein a first locking head 24 is provided on the first slot 23, and a crossbar with a first socket 14 and a pressure part 15 is connected to an upper surface of a housing of the male connector 1 via a support rod 13, wherein the first socket 14 and the pressure part 15 are located on opposite sides of the support rod 13. From Figure 2, it can be seen that the first slot 23 can be formed by thinning an upper case of the female connector 2, and in an optional solution, it is also possible to directly use a fence structure 26 shown in Figure 2 to form the first slot 23 rather than thinning the upper case of the female connector 2. Regardless of which method is used to form the first slot 23 as described above, its fundamental action and purpose are to form the first locking head 24 within the first slot 23, and to ensure that after the first socket 14 is locked to the first locking head 24, the depth of the corresponding first slot 23 (or understood as the fence effect it constructs) can ensure that external force do not easily hit/squeeze the crossbar located within the first slot 23, affecting the stability of the locking state of the first socket 14 and the first locking head 24.

After the female connector 2 is connected to the male connector 1, the first locking head 24 and the first socket 14 are locked, and the first slot 23 accommodates a part of the crossbar located above the male connector 1, wherein a guardrail structure 16 with a height greater than or equal to that of the pressure part 15 in a locked state and being used for prevent touching is provided in an area where the male connector 1 accommodates the crossbar. As shown in Figure 2, one implementation method is that the guardrail structures 16 are a pair of plastic baffles arranged on both sides of the pressure part 15, in order to prevent the vibration of some components adjacent to the optical and electrical hybrid connector in a vibrating environment, which may cause the lower pressure part 15 to be accidentally touched.

The embodiments of the present disclosure provide a set of first locking head and first socket suitable for the locking and unlocking between the male and female connectors, as well as their associated matching structures, achieving stability of the connection state of optical and electrical hybrid connectors suitable for vibration environments.

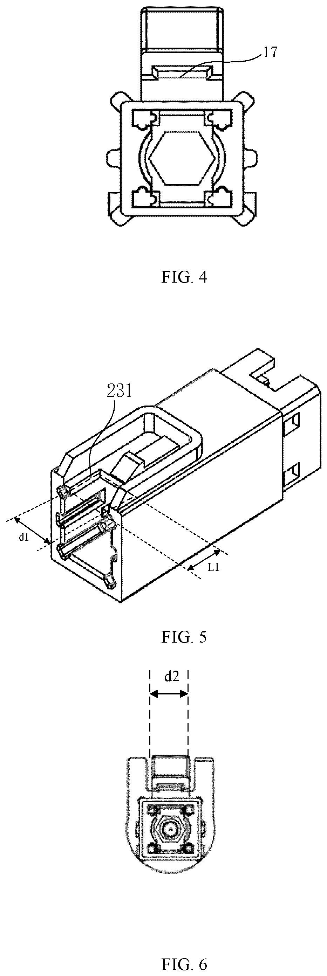

For shock-resistant scenarios, using only the first locking head 24 and the first socket 14, as well as the matching guardrail structure 16 that prevents the pressure part 15 of the crossbar from being accidentally touched, may not achieve the optimal solution proposed by the present disclosure in terms of effectiveness. Especially when the volume of the connector itself is not large, if the corresponding first socket 14 is too close to an end of the crossbar and adjacent to the support rod 13, it will cause a larger torque difference between the position of the corresponding pressure part 15 and the position of the first socket 14 compared to the support rod 13, which will bring new instability in environments with vibration. In order to solve the problem under this subdivision, the present disclosure also provides a preferred extended solution, as shown in Figures 2, 3, and 4. In addition, a limiting portion 25 in a form of protrusion is disposed in an axial extension direction of the first locking head 24 located on the first slot 23 (as shown in Figure 3, where the dashed block clearly identifies the limiting portion 25 in the example scene of the figure), and the crossbar located on the male connector 1 and having a first socket 14 is provided with an elongated concave groove 17. Through the observation of Figure 2 and Figure 4, it can be seen that in the preferred solution, the extension length of the elongated concave groove 17 reaches an area near the support rod 13 directly from an end of the crossbar near the connection port, covering the position where the first socket 14 is located, and thus this setting not only adjusts the torque balance between the crossbar where the first socket 14 is located and the crossbar owned by the pressure part 15, but more importantly, the elongated concave groove 17 is used to sleeve on the limiting portion 25 when the first locking head 24 is locked with the first socket 14, so that the locking state between the first locking head 24 and the first socket 14 can achieve better stability under the auxiliary restriction of the elongated concave groove 17 and the limiting portion 25. At this time, even if there is an external vibration object that can break through the fence structure 26 in Figure 2 and impact the crossbar located in the first slot 23, it can effectively cancel out this impact force based on the configuration that the elongated concave slot 17 is sleeved on the limiting portion 25, and there will be no change in the locking stability of the first locking head 24 and the first socket 14.

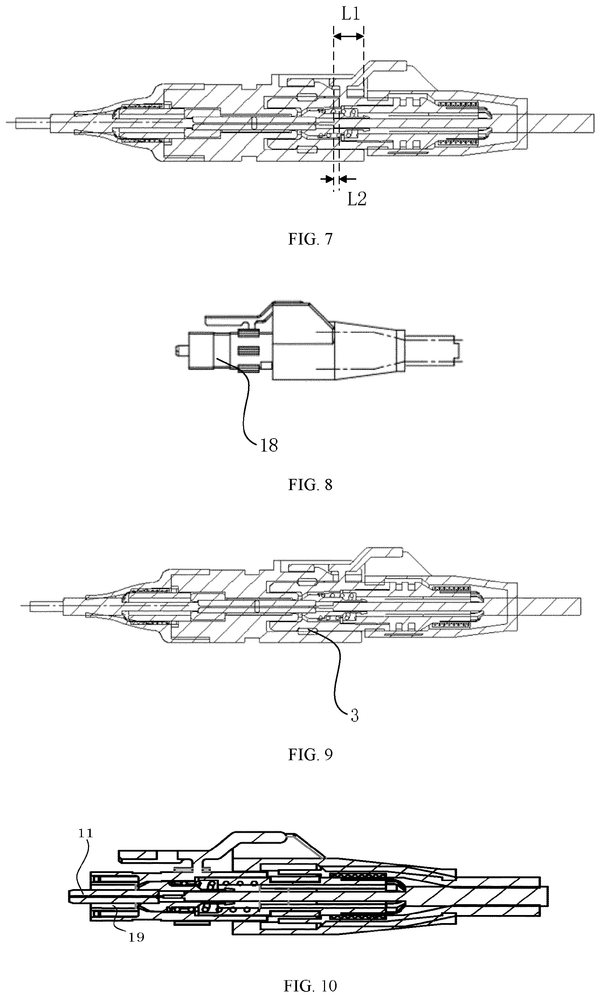

In the specific implementation process, the volume of the connector will be much smaller than the intuitive feeling shown in the current diagram. Therefore, considering the total length of the connector after connection, as shown in Figures 5 and 6, the first slot 23 is provided with a first notch 231 near a connecting end of the female connector 2 (marked with a dashed block in Figure 5), and a width d1 of the first notch 231 exactly accommodates a width d2 of the support rod 13. A length L1 of the first notch 231 meets a distance required for the support rod 13 to enter a connecting end face of the female connector 2 in the axial direction after the connection process between the male connector 1 and the female connector 2 is completed, as shown in Figure 5. Figure 7 shows a sectional view of the corresponding male connector 1 and the female connector 2 after they have been connected, there being still a more surplus space L2 for length L1 compared to the distance space entered by the support rod 13. This is because as long as the length L1 of the corresponding first notch 231 remains at a certain distance from a ring concave groove 18 to be introduced in the later embodiments of the present disclosure, which does not affect waterproofing and dustproof, and a more surplus space can also ensure an adaptive deformation space of the corresponding support rod 13 during the locking and unlocking process (this will be discussed in another extended implementation scheme of the present disclosure, which will not be elaborated here).

For the three major problems listed in the "background" section of the present application, i.e. dustproof, waterproofing, and shock resistance, the most concerned problem, i.e. shock resistance problem, has been addressed in the above-mentioned embodiment 1, namely the problem of stability issues caused by vibrations of the vehicle itself in the connection structure between the female connector 2 and the male connector 1 when being used in similar automotive application scenarios (not limited to automotive application scenarios). However, for the other two factors, i.e. dustproof and waterproofing, the current technical solution of the embodiment 1 cannot effectively solve them. Therefore, a more optimal implementation solution is provided in combination with the embodiments of the present disclosure, which can effectively compensate for the remaining two problem factors mentioned above, i.e. dust and water resistance. Referring to Figure 2, as shown in Figures 8 and 9, a ring concave groove 18 is provided in a housing area between a connecting end face of the male connector 1 and a housing area of the male connector (1) where the supporting rod 13 is provided; and as shown in Figure 9, the ring concave groove 18 is used to be enclosed one or more waterproof rubber rings 3 (only one waterproof rubber ring 3 is shown in Figure 9, but in alternative solutions, multiple narrow and wide waterproof rubber rings 3 can be combined for better waterproof effect and easier installation. For example, two or three waterproof rubber rings 3 with circular cross-sections can be directly used to achieve waterproof effect). In the specific implementation process, considering the full utilization of the first notch 231 as the first stage for carrying the waterproof rubber ring 3 to enter the female connector 2 during the connection process, and using a thinned area of the first slot 23 as the second stage for carrying the waterproof rubber ring 3 into the female connector 2 during the connection process, it is ensured that the corresponding installation of the waterproof rubber ring 3 can achieve the locking of the first locking head 24 and the first socket 14 without feeling the additional damping sensation brought by the waterproof rubber ring 3 during the connection process between the male connector 1 and the female connector 2. The above effect requires not only the technical features of the first notch 231 and the first slot 23, but also the following features to ensure the two-stage setting of the waterproof rubber ring 3 reaching the preset waterproof position. That is, after completing the connection between the male connector 1 and the female connector 2, an inner surface of the housing where the ring concave groove 18 is in contact with the female connector 2 is opposite to an outer surface of the female connector 2 where the first slot 23 is located, as shown in Figure 9.

In the preferred embodiments of the present disclosure, for the waterproof and dustproof, a set of effective waterproof structures is also provided, which can structurally interact with the locking structure, greatly improving its installation and dustproof and waterproof effect.

The reason why it is described as a waterproof structure that can structurally interact with the locking structure mentioned above is also explained through Figure 9. In the sectional view after the completion of the connection shown in Figure 9, it can be seen that the inner wall position of the female connector 2, against which the corresponding waterproof rubber ring 3 abuts, is exactly in the connection between the first locking head 24 and the limiting portion 25. In this way, the waterproof rubber ring 3 will have a certain lifting effect on the first locking head 24, thereby enhancing the locking effect between the first locking head 24 and the first socket 14.

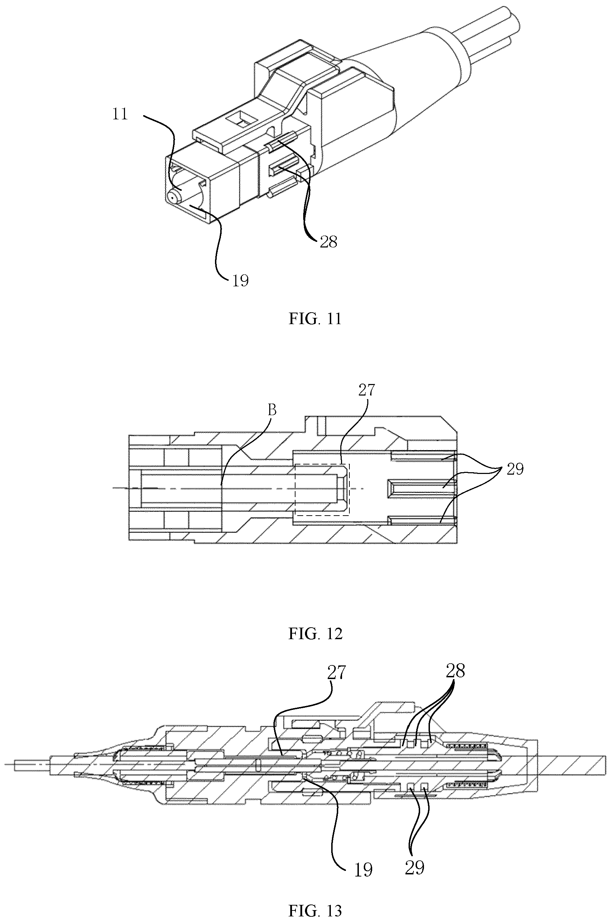

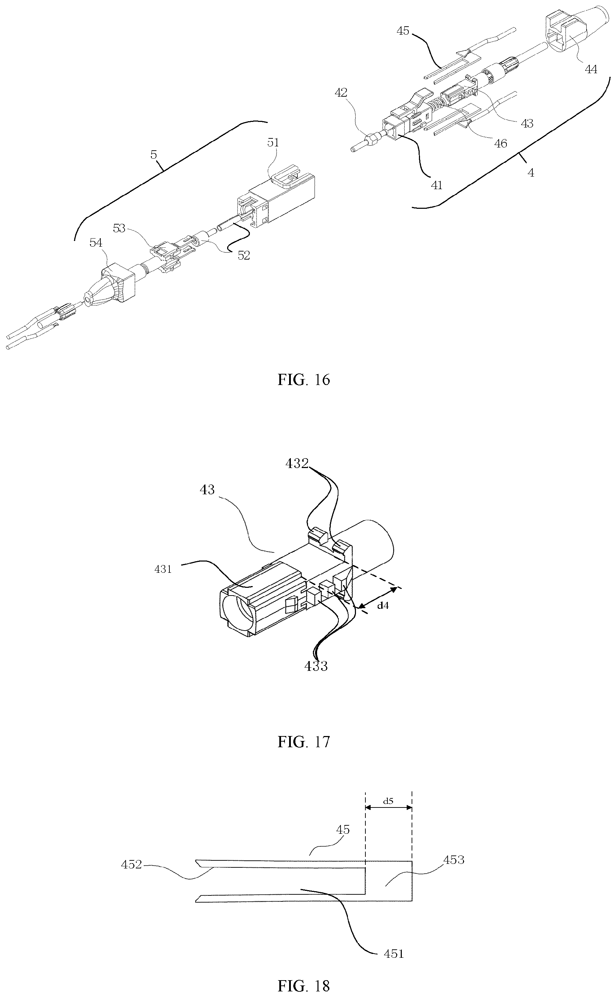

As shown in Figures 10 and 11, the connecting end of the male connector 1 is provided with a sub-female port 19, wherein the first ceramic abutting head 11 is located at a central axis position of the sub-female port 19, and in Figure 11, a central position where the central axis position of the sub-female port 19 is located is occupied by the first ceramic abutting head 11, thereby forming a structure that the housing of the male connector 1 serves as an outer wall of the sub-female port 19, and the first ceramic abutting head 11 serves as the center filling for the sub-female port 19, and the remaining space of the sub-female port 19 forms an ring cavity. As shown in Figure 12, the connecting end of the female connector 2 is provided with a sub-male port 27 having a hollow structure at its central axis (it should be noted that only the key area of the sub-male port 27 is marked in Figure 12, and it can also be understood that the sub-male port 27 extends to the end face marked with B on the left side of Figure 12, but regardless of which interpretation, it does not affect the expression of its technical points, and the difference lies only in the accompanying formal differences), wherein the second ceramic abutting head 21 is located in the hollow structure of the sub-male port 27. Here, it should be supplementary stated that the second ceramic abutting head 21 labeled in Figure 1 actually refers to a metal collar that the second ceramic abutting head 21 sleeves, and the corresponding first ceramic abutting head 11 will also be inserted into the corresponding metal collar in Figure 1 after the connection is completed. The reason is that the male connector 1 and the female connector 2 are both formed by plastic molding due to cost and implementation requirements. In order to ensure the stability of the ceramic abutting head, metal collars are usually added to the contact positions of the first ceramic abutting head 11 and the second ceramic abutting head 21 (the corresponding metal collars can also be intuitively seen through the exploded diagram shown in Figure 16 later).

As shown in Figure 13, after completing the connection between the male connector 1 and the female connector 2, the sub-male port 27 and the sub-female port 19 are synchronously connected, and at the same time, the first ceramic abutting head 11 and the second ceramic abutting head 21 are connected. In Figure 13, since the connection between the sub-male port 27 and the sub-female port 19 has been completed, the area where the sub-male port 27 is located is actually the ring cavity area formed by the sub-female port 19. For the convenience of simultaneous labeling, only the labeling position of the sub-female port 19 is set in the remaining area that has not been completely filled by the sub-male port 27. In Figure 13, the first ceramic abutting head 11 and the second ceramic abutting head 21 complete the contact of their respective cross-sections within the hollow structure of the sub-male port 27, thereby completing the cross-sectional docking of the optical fibers located at their respective central axis positions.

In order to achieve multiple specifications for the male connector 1 and the female connector 2, and to ensure that only the male connector 1 and the female connector 2 satisfying compatible specifications can be connected, it is not possible to complete the connection when the specifications are inconsistent between the two. In combination with the embodiments of the present disclosure, there is also a preferred implementation scheme, in which the housing surface of the male connector 1 is provided with one or more anti-misoperation protrusions 28 (as shown in Figure 11); and the inner wall of the female connector 2 is provided with one or more anti-misoperation grooves 29 (as shown in Figure 12) that are compatible with the anti-misoperation protrusions 28 on the housing surface, wherein when there are multiple specifications of the male connectors 1 and the female connectors 2, the positions and quantities of corresponding anti-misoperation protrusions 28 and anti-misoperation grooves 29 ensure that the male connector 1 and the female connector 2 of different specifications cannot be connected.

As a specific optional disposing position for the anti-misoperation protrusion 28 and anti-misoperation groove 29, the first method includes disposing a predetermined number of anti-misoperation protrusions 28 at a predetermined position between the ring concave groove 18 and the connecting end face of the male connector 1. The second method includes disposing a predetermined number of anti-misoperation protrusions 28 at a predetermined position between the ring concave groove 18 and the tail of the male connector 1, wherein the anti-misoperation groove 29 is provided to be adapted to the anti-misoperation protrusion 28. Through practice, it has been verified that the second method is more suitable for scenarios where both dust-proof and waterproof effects need to be considered simultaneously (the relevant figures presented in the embodiments of the present disclosure all adopt this method). The first method requires the corresponding anti-misoperation groove 29 to extend beyond the position of the ring concave groove 18, which will affect the waterproof rubber ring 3 to play its due role, because the corresponding anti-misoperation groove 29 will become a potential area for gaps to occur.

In the implementation process of the present disclosure, various optional forms are also provided for the pressure part 15 to meet different unlocking methods.

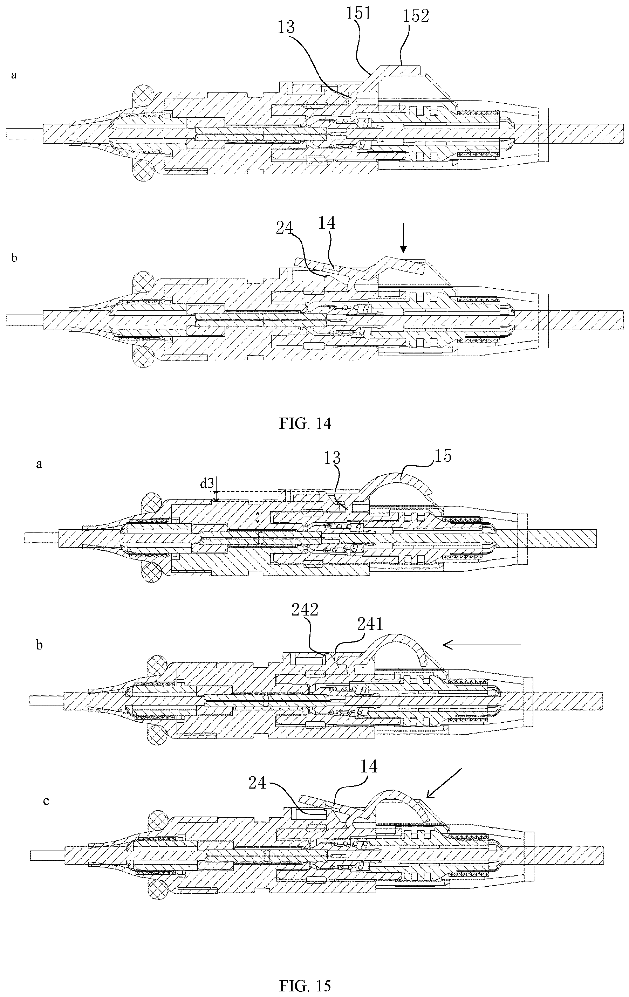

As shown in Figure 14, the first form is that the pressure part 15 is composed of a crossbar being located at a corresponding side of the support rod 13 and folded in a predetermined shape, wherein the predetermined shape includes a diagonal edge 151 connected to the crossbar where the first socket 14 is located, and a horizontal edge 152 connected to the diagonal edge 151. Figure 14a is an effect diagram showing that the corresponding male connector 1 and female connector 2 are stably connected and loaded, while Figure 14b is a schematic diagram of the effect of applying vertical downward pressure to the horizontal edge 152 of the pressure part 15 to lift the crossbar containing the first socket 14 on the other side of the support rod 13 based on the lever principle, achieving the unlocking of the first socket 14 and the first locking head 24. At this point, as shown in Figure 14, the first locking head 24 is a half arrow shape with only an off-side arrow wing 241 remaining in a flat position.

As shown in Figure 15, the second form is that the predetermined shape is transformed into a semi-circular arc by a crossbar located on the corresponding side of the support rod 13.

When the above-mentioned pressure part 15 is in the first form, its matching unlocking mechanism can be manifested as follows: the support rod 13 is made of hard plastic material, and the crossbars located on both sides of the support rod 13 form a seesaw, completing the locking and unlocking between the first locking head 24 and the first socket 14.

When the upper pressure part 15 is in the second form, the support rod 13 is made of elastic and slightly hard plastic material, and the pressure part 15 located on one side of the support rod unlocks the locking between the first locking head 24 and the first socket 14 by horizontally pushing and downwards pressing.

In order to more effectively utilize the characteristics of the unlocking action process brought by the second form, it is preferred, as shown in Figure 15b, that the first locking head 24 is a half arrow shape that is flat, retains only an off-side arrow wing 241, and has a preset length of widening d3, and an end of the arrow wing 241 used to lock the first socket 14 is provided with a locking protrusion 242, which is used to prevent the surface of the crossbar around the first socket 14 from shaking after the first locking head 24 and the first socket 14 are locked. Compared to the structure in Figure 14, the semi-circular arc described earlier must be used in Figure 15 to better undertake the horizontal leftward thrust as shown in Figure 15b, which enables the first socket 24 to be decoupled from the locking protrusion 242, and then to continuously undertake the oblique downward force formed by the horizontal leftward thrust and vertical downward thrust of Figure 15b (similar to the seesaw effect shown in Figure 14b), causing the first socket 24 to detach from the first locking head 14.

At this point, return to Figure 7 again which is the sectional view of the fully mated male connector 1 and female connector 2. The length L1 has a more surplus space L2 compared to the distance space entered by the support rod 13, which can also ensure that the corresponding support rod 13 can adaptively withstand the deformation space shown in Figure 15b during the locking and unlocking process.

### Embodiment 2

As for the complete solution of Embodiment 1 of the present disclosure, it further considers better implementation solutions in the optical-electrical mixing process, and forms a more complete and beneficial solution based on Embodiment 1. Therefore, based on the corresponding shockproof, waterproof, and dustproof technology implementation described in Embodiment 1, Embodiment 2 of the present disclosure elaborates on the technical details of the relevant technical solution from the perspective of optical-electrical mixing with the same connector structure.

In order to ensure the fluency in describing Embodiment 2 of the present disclosure, a different independent numbering system is adopted from the first embodiment of the present disclosure. Here, the same structural name or similar structural components can be understood by those skilled in the art when reading this embodiment. Those skilled in the art will not assume that there is no correlation between the two because of the different corresponding numbers. The correlation between the structure in Embodiment 2 of the present disclosure and the structure in the first embodiment should be reasonably inferred through the structure management of text and drawings.

Embodiment 2 of the present disclosure provides an optical and electrical hybrid connector, as shown in Figures 16-22, comprising a male connector 4 and a female connector 5 (respectively correspond to the male connector 1 and the female connector 5 in Embodiment 1, and the subsequent embodiments of the present disclosure will not be further explained in this way so as to avoid redundant content). Next, the relevant structures will be elaborated in conjunction with various figures.

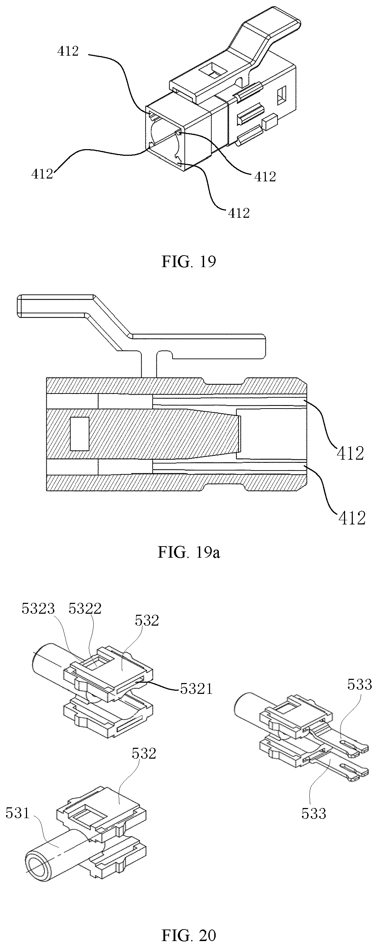

The male connector 4 is composed of a first housing sleeve 41, a first ferrule assembly 42, a central shaft assembly 43, and a first boot 44, which are interlocked together; wherein, as shown in Figures 17, 18, and 19, at least one horizontal plane of the central shaft assembly 43 is provided with a rectangular protrusion 431, which is used to limit a slot 451 of a gate-type electrical terminal 45 and support two side gateposts 452; a part of the gatepost 452 of the gate-type electrical terminal 45 that exceeds an end face of the central shaft assembly 43 is embedded in an accommodating chamber 412 of the first housing sleeve 41 after assembling the first housing sleeve 41 and the central shaft assembly 43; and as shown in Figure 19a, the accommodating chamber 412 is in a shape of strip, and is made on an inner wall of a long side, parallel to an axial direction, near the first housing sleeve 41.

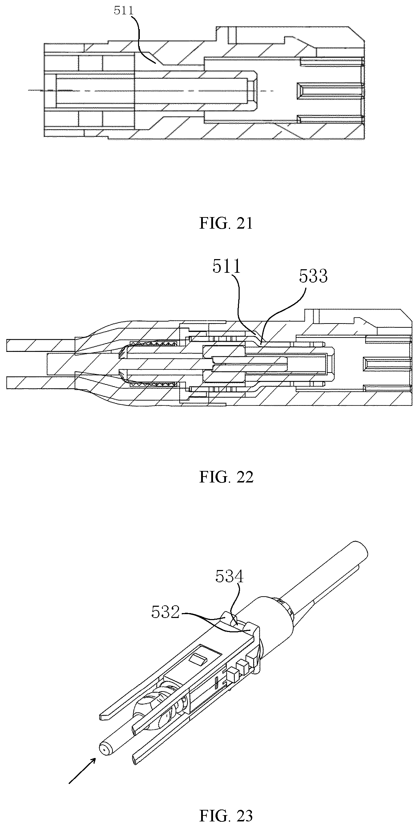

The female connector 5 is composed of a second housing sleeve 51, a second ferrule assembly 52, a power transmission assembly 53, and a second boot 54, which are sleeved together, wherein, as shown in Figure 20, the power transmission assembly 53 includes a columnar body 531 that is docked with the second ferrule assembly 52, and a positioning member 532 fixed on the columnar body 531 and configured to embed a fork-shaped electrical terminal 533; and a fork head of the fork-shaped electrical terminal 533 is fixed after passing through a guide through-hole 511 on an inner wall of the second housing sleeve 51. Figure 21 is a sectional view of the guide through-hole 511 on the inner wall of the second housing sleeve 51 before being passed through by the fork head of the fork-shaped electrical terminal 533, while Figure 22 is a sectional view of the complete assembly of the fork head passing through the guide through-hole 511 on the inner wall of the second housing sleeve 51.

When the male connector 4 and the female connector 5 are connected with each other, the first ferrule assembly 42 is docked with the second ferrule assembly 52, and the fork-shaped electrical terminal 533 is in contact with the two side gateposts 452 of the gate-type electrical terminal 45 by means of contacts at both sides of the fork head.

The embodiments of the present disclosure propose a set of optical and electrical hybrid connector suitable for shock-resistant scenarios, which ingeniously integrates the electrical connection structure into traditional pure photoelectric decoders, and do not require additional increase in optical interface volume during implementation, fully reusing the inherent characteristics of the original structure and extracting positions for layout of electrical connection structures; not only can it ensure that there will be no electricity leakage or other issues, but it can also ensure that the strength of the integrated photoelectric connector will not decrease.

As shown in Figure 17, the rectangular protrusion 431 on the corresponding central shaft assembly 43 is only shown on one side. In the specific implementation scheme, the difference between providing a rectangular protrusion 431 on one side or providing rectangular protrusions 431 on both opposite sides is the corresponding difference in the number of gate-type electrical terminals 45 that can be laid out. That is, for different power supply structures, it is possible to selectively provided a rectangular protrusion 431 on one side or provide two rectangular protrusions 431 on both sides. Both should be understood as choices that can be made according to the needs of scenes under the innovative core of the present disclosure, and should be fallen within the scope of protection of the present disclosure. Rectangular protrusions 431 are symmetrically made on the upper and lower horizontal planes of the central shaft assembly 43. In order to facilitate processing and consider the stability of installing the gate-type electrical terminal 45 on the central shaft assembly 43, a limiting protrusion 432 is disposed on a side of the corresponding horizontal plane near the gate beam 453 of the fixed gate-type electrical terminal 45 to limit the position of the gate beam 453. Referring to Figures 17 and 18, the height d5 of the gate beam 453 should be as close as possible to the distance d4 from the limiting protrusion 432 to an edge of the rectangular protrusion 431, so as to achieve the best fixing effect of the limiting protrusion 432.

In the implementation process of the present disclosure, in order to achieve better dustproof effect, the corresponding first boot 44 is preferably formed by pouring, which has the greatest advantage of filling gaps between components through the pouring process and achieving better dustproof effect. At this point, the limiting protrusion 432 proposed in the above improvement plan can be further reused in the current solution of using pouring to achieve the first boot 44. In addition, as further shown in Figure 17, one or more pulling-resistant protrusions 433 are symmetrically arranged on the left and right sides of the central shaft assembly 43, and combined with the limiting protrusion 432, jointly act on the first boot 44 formed by pouring, locking the first boot 44 against pulling in four directions: up, down, left, and right. In this way, regardless of the direction in which the first boot 44 is bent and pulled, there are objects, such as the limiting protrusion 432 and/or the pulling-resistant protrusion 433, playing a role of corresponding pulling effects in the matching area that restrict the first boot 44 from leaving its original assembly position.

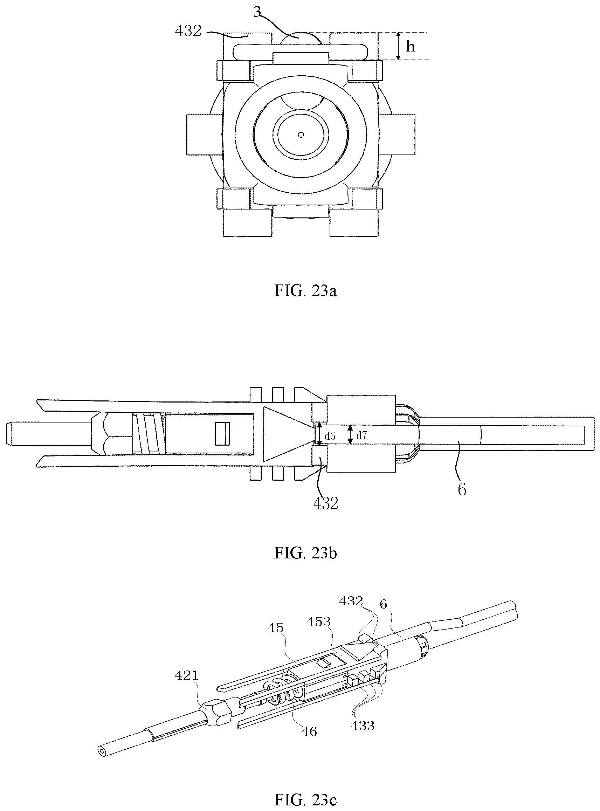

As shown in Figures 23, 23a, and 23b, a channel 434 is provided in the middle of the limiting protrusion 432 on each horizontal plane for through the wire 63 to pass, wherein the height of the limiting protrusion 432 is consistent with the surface height h of the wire 6 passing through the channel 434, and the difference between the width d6 of the channel 434 and the diameter d7 of the wire 6 is less than a preset value. As shown in Figure 23c, once the welding between the wire end 63 and the gate beam 453 is completed, the corresponding welding area, as well as the connection area between the wire end and a protective sleeve of the wire 6, will have the same effect as the pulling-resistant protrusion 433. Therefore, when combined with the limiting protrusion 432, it will have the same effect as the multi-point pulling-resistant protrusion 433.

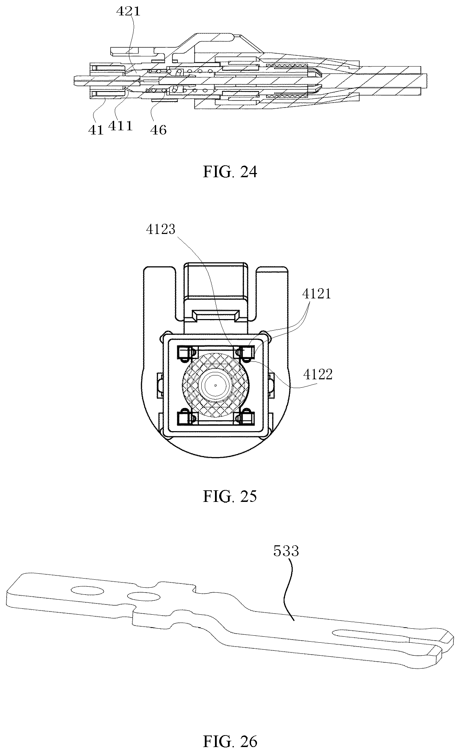

In order to achieve the docking effect between the ferrule assemblies of the male connector 4 and those of the female connector 5, and also considering the existence of errors between the housing components, it is most effective to use the spring 46 as the final guarantee of the mutual contact force between the two ferrule assemblies. Therefore, there is another implementation possibility in combination with the embodiments of the present disclosure that, as shown in Figures 23 and 24, the male connector 4 further comprises a spring 46, and one side of the limiting block 421 on the first ferrule assembly 42 is in contact with the limiting groove, for the spring 46, of the central shaft assembly 43 through the spring 46, while the other side of the limiting block 421 is directly in contact with the ferrule groove 411 preset on the first housing 11.

As shown in Figure 25, two outer walls 1121 of the accommodating chamber 412 are respectively composed of the housing corner contours of the first housing sleeve 41, the remaining outer wall 1122 of the accommodating chamber 412 being composed of an inner wall pattern formed from the sub-female port, and the last side 1123 of the accommodating chamber 412 directly communicates with the space of the sub-female port, wherein the last side is reserved for the fork-shaped electrical terminal 533 to enter and complete the electrical intercommunication channel with the gate-type electrical terminal 45. The position area of the corresponding sub-female port is marked with semi-transparent shading in Figure 25.

As shown in Figure 25, in the preferred implementation scheme, a semi-circular groove is made on the inner wall pattern in the same direction as the accommodating chamber 412. The reasons for making the semi-circular groove are firstly to provide an airflow groove to assist in heat dissipation on the gatepost 452 of the gate-type electrical terminal 45, and secondly to reduce the corresponding friction during the insertion process of the gatepost 452 of the gate-type electrical terminal 45, making the installation process more convenient

After focusing on the possible details of the implementation of the expanded scheme for the male connector 4 above, the following will fully explain the ideas for improvement that may be introduced in the implementation scheme of the present disclosure, as well as their supporting principles and original intentions, starting from the female connector 5.

Figure 20 shows a structural implementation of a preferred positioning component 532 provided in an embodiment of the present disclosure. When referring to Figure 20 above, it is only shown as a schematic matching structure for the implementation of power transmission assembly 53, without elaborating on the details of preferred structural details in Figure 20. Therefore, as a preferred implementation solution, the structure of the positioning member 532 for embedding the fork-shaped electrical terminal 533 includes a rectangular groove 5321 provided on the positioning member 532, and a skylight 5322 is made on a section of the corresponding rectangular groove 5321 far away from the fork head to provide a welding area for the wire 6 and the fork-shaped electrical terminal 533.

Furthermore, the setting of the skylight 5322 retains the housing portion of the positioning member 532 located at the end of the rectangular slot 5321, thereby forming a contact limit for the embedded fork-shaped electrical terminal 533 during the embedding process, as well as digesting the contact force of the gate-type electrical terminal 45 received when connecting the male connector 4 and the female connector 5.

In order to further adapt to the considerations of digesting the contact force mentioned above, as shown in Figure 26, the fork-shaped electrical terminal 533 is made in a Z shape, with the part embedded in the positioning member 532 being referred to an upper horizontal part and the exposed part of the fork-shaped electrical terminal 533 being referred to a lower horizontal part, and the connecting member between the upper and lower horizontal parts is a vertical part which buffers the impact force of the fork-shaped electrical terminal 533 and the gate-type electrical terminal 45 when the male connector 4 and the female connector 5 are connected with each other.

The electrical connection structure involved in the embodiments of the present disclosure also has its own strength, and in the preferred implementation scheme, damping and convenience during the corresponding assembly process are also designed and optimized.

The above descriptions are only preferred embodiments of the present disclosure and not intended to limit the present disclosure. Any modifications, equivalent substitutions, improvements, etc. provided within the spirit and principles of the present disclosure should be included in the scope of protection of the present disclosure.

## Claims

1. A shock-resistant optical and electrical hybrid connector, comprising a male connector (1) and a female connector (2), wherein the male connector (1) and the female connector (2) are respectively provided inside with a first ceramic abutting head (11) and a second ceramic abutting head (21), both of which contain optical fibers, as well as a first metal contact head (12) arranged on at least one side of the first ceramic abutting head (11) and a second metal contact head (22) arranged on at least one side of the second ceramic abutting head (21), **characterized in that** an interlocking structure between the male connector (1) and the female connector (2) comprises:
a first slot (23) having a first predetermined length along an axial direction, and located on an upper surface of a housing of the female connector (2) near a connecting end of the female connector (2) and the male connector (1), wherein a first locking head (24) is provided on the first slot (23);
a crossbar with a first socket (14) and a pressure part (15) connected on an outer surface of the male connector (1) through a support rod (13); wherein the first socket (14) and the pressure part (15) are located on opposite sides of the support rod (13);
after the female connector (2) is connected to the male connector (1), the first locking head (24) and the first socket (14) are locked with each other, and the first slot (23) accommodates a part of the crossbar located above the male connector (1), wherein an anti-touch guardrail structure (16) with a height greater than or equal to a height of the pressure part (15) in a locked state is provided in an area where the male connector (1) accommodates the crossbar.

2. The shock-resistant optical and electrical hybrid connector of claim 1, wherein a limiting portion (25) in a form of a protrusion is further disposed in an axial extension direction of the first locking head (24) located on the first slot (23), and accordingly, an elongated concave groove (17) is made on the crossbar located on the male connector (1) and provided with the first socket (14);
wherein when the first locking head (24) is locked with the first socket (14), the elongated concave groove (17) is sleeved onto the limiting portion (25).

3. The shock-resistant optical and electrical hybrid connector of claim 1, wherein the first slot (23) is provided with a first notch (231) near the connecting end of the female connector (2), and a width of the first notch (231) is exactly accommodate a width of the support rod (13), a length of the first notch (231) meeting a distance required for the support rod (13) to enter a connecting end face of the female connector (2) in an axial direction during a connection process between the male connector (1) and the female connector (2).

4. The shock-resistant optical and electrical hybrid connector of claim 1, wherein a ring concave groove (18) is provided in a housing area between a connecting end face of the male connector (1) and a housing area of the male connector (1) where the supporting rod (13) is provided, and the ring groove (18) is configured to be enclosed one or more waterproof rubber rings (3).

5. The shock-resistant optical and electrical hybrid connector of claim 4, wherein after connecting the male connector (1) and the female connector (2), an inner surface of the housing where the ring concave groove (18) abuts against the female connector (2) is partially opposite to an outer surface of the female connector (2) where the first slot (23) is located.

6. The shock-resistant optical and electrical hybrid connector of claim 5, wherein the connecting end of the male connector (1) is provided with a sub-female port (19), wherein the first ceramic abutting head (11) is located at a central axis position of the sub-female port (19); the connecting end of the female connector (2) is provided with a sub-male port (27), wherein the second ceramic abutting head (21) is located at a central axis position of the sub-male port (27);
after the male connector (1) is connected with the female connector (2), the sub-male port (27) is synchronously connected with the sub-female port (19), and at the same time, the first ceramic abutting head (11) abuts against the second ceramic abutting head (21).

7. The shock-resistant optical and electrical hybrid connector of any one of claims 1-6, wherein a housing surface of the male connector (1) is provided with one or more anti-misoperation protrusions (28); and an inner wall of the female connector (2) is provided with one or more anti-misoperation grooves (29) that are compatible with the anti-misoperation protrusions on the housing surface of the male connector (1); wherein when there are multiple specifications of the male connectors (1) and the female connectors (2), the positions and quantities of corresponding protrusions and grooves ensure that the male connectors (1) and the female connectors (2) of different specifications are incapable of connecting with each other.

8. The shock-resistant optical and electrical hybrid connector of any one of claims 1-6, wherein the pressure part (15) is formed by the crossbar located on a corresponding side of the support rod (13) folded in a predetermined shape; the predetermined shape includes a diagonal edge (151) connected to the crossbar where the first socket (14) is located, and a horizontal edge (152) connected to the diagonal edge (151); or
the predetermined shape is formed by transforming the crossbar located on the corresponding side of the support rod (13) into a semi-circular arc.

9. The shock-resistant optical and electrical hybrid connector of claim 1, wherein the support rod (13) is made of a hard plastic material, and the crossbar located on both sides of the support rod form a seesaw to realize locking and unlocking between the first locking head (24) and the first socket (14); or
the support rod (13) is made of an elastic and slightly hard plastic material, and the pressure part (15) located on one side of the support rod unlocks the first locking head (24) and the first socket (14) by horizontally pushing and pressing down.

10. The shock-resistant optical and electrical hybrid connector of claim 9, wherein the first locking head (24) is a half arrow shape that is flat and retains only an off-side arrow wing (241), wherein the half arrow shape has a predetermined length of widening d3, and an end of the arrow wing (241) configured to lock the first socket (14) is provided with a locking protrusion (242), which is configured to limit a surface of the crossbar around the first socket (14) from shaking after the first locking head (24) and the first socket (14) are locked.

11. An optical and electrical hybrid connector comprising a male connector (4) and a female connector (5), wherein the male connector (4) is composed of a first housing sleeve (41), a first ferrule assembly (42), a central shaft assembly (43), and a first boot (44) that are mutually sleeved; wherein at least one horizontal plane of the central shaft assembly (43) is provided with a rectangular protrusion (431), which is configured to limit a slot (451) of a gate-type electrical terminal (45) and support gateposts (452) on both sides of the gate-type electrical terminal (45); a part of the gatepost (452) of the gate-type electrical terminal (45) that exceeds an end face of the central shaft assembly (43) is embedded in an accommodating chamber (412) of the first housing sleeve (41) after assembling the first housing sleeve (41) and the central shaft assembly (43); the accommodating chamber (412) is in a shape of strip, and is made near an inner wall of a long side, parallel to the axial direction, of the first housing (41); the female connector (5) is composed of a second housing sleeve (51), a second ferrule assembly (52), a power transmission assembly (53), and a second boot (54) that are mutually sleeved; wherein the power transmission assembly (53) comprises a columnar body (531) that is docked with the second ferrule assembly (52), and a positioning member (532) fixed on the columnar body (531), wherein the positioning member (532) is configured to embed a fork-shaped electrical terminal (533), and a fork head of the fork-shaped electrical terminal (533) is fixed after passing through a guide through-hole (511) on an inner wall of the second housing sleeve (51);
wherein when the male connector (4) and the female connector (5) are connected, the first ferrule assembly (42) is docked with the second ferrule assembly (52), and contacts on both sides of the fork head of the fork-shaped electrical terminal (533) are respectively abutted against the gateposts on both sides of the gate-type electrical terminal (45).

12. The optical and electrical hybrid connector of claim 11, wherein the rectangular protrusions (431) are symmetrically made on upper and lower horizontal planes of the central shaft assembly (43), and the corresponding horizontal plane is provided with limiting protrusions (432) near a side fixing a gate beam (453) of the gate-type electrical terminal (45) for limiting a position of the gate beam (453).

13. The optical and electrical hybrid connector of claim 12, wherein one or more pulling-resistant protrusions (433) are symmetrically arranged on left and right sides of the central shaft assembly (43), and combined with the limiting protrusions (432), jointly act on the first boot (44) formed by pouring, locking the first boot (44) against pulling in four directions: up, down, left, and right.

14. The optical and electrical hybrid connector of claim 12, wherein a channel (434) is provided in a middle of each limiting protrusion (432) on the horizontal plane for the wire (6) to pass through; wherein a height of the limiting protrusion (432) is consistent with a surface height of the wire (6) passing through the channel (434), and a difference between a width of the channel (434) and a diameter width of the wire (6) is less than a preset value.

15. The optical and electrical hybrid connector of claim 11, wherein the male connector (4) further comprises a spring (46), and one side of a limiting block (421) on the first ferrule assembly (42) abuts against a limiting groove, for the spring (46), of the central shaft assembly (43) through the spring (46), while the other side of the limiting block (421) directly abuts against a preset ferrule guide groove (411) on the first housing sleeve (41).

16. The optical and electrical hybrid connector of claim 11, wherein two outer walls of the accommodating chamber (412) are respectively formed by a housing corner contour of the first housing sleeve (41), one remaining outer wall of the accommodating chamber (412) is composed of an inner wall pattern formed from the female port, and a last side of the accommodating chamber (412) directly communicates with a space of the female port;
wherein the last side is reserved for the fork-shaped electrical terminal (533) to enter to form an electric intercommunication channel with the gate-type electrical terminal (45).

17. The optical and electrical hybrid connector of claim 16, wherein a semi-circular groove is made on the inner wall pattern in a same direction as the accommodating chamber (412).

18. The optical and electrical hybrid connector of any one of claims 11-17, wherein a structure, for embedding the fork-shaped electrical terminal (533), on the positioning member (532) comprises a rectangular groove (5321) arranged on the positioning member (532), and a skylight (5322) is made on a section of the corresponding rectangular groove (5321) far away from the fork head, for providing a welding area between the wire (6) and the fork-shaped electrical terminal (533).

19. The optical and electrical hybrid connector of any one of claims 11-17, wherein the providing of the skylight (5322) retains a housing part of the positioning member (532) located at an end of the rectangular slot (5321), thereby forming a abutting limit for the embedded fork-shaped electrical terminal (533) during an embedding process, and digesting abutting force of the gate-type electrical terminal (45) received when the male connector (4) and the female connector (5) are connected.

20. The optical and electrical hybrid connector of any one of claims 11-17, wherein the fork-shaped electrical terminal (533) is made in a Z shape, wherein a part embedded in the positioning member (532) is an upper horizontal part, and a part exposed outside the fork-shaped electrical terminal (533) is a lower horizontal portion; a connecting member between the upper and lower horizontal parts is a vertical part, wherein the vertical part buffers impact force of the fork-shaped electrical terminal (533) and the gate-type electrical terminal (45) when the male connector (4) and the female connector (5) are connected.
